# EUROPEAN PATENT SPECIFICATION

(11) **EP 1 610 883 B1**
(45) Date of publication and mention of the grant of the patent: **20.08.2014**
(21) Application number: 04724356.3
(22) Date of filing: 30.03.2004
(51) Int. Cl.: B01D 53/68, B01D 53/86

(54) **METHOD FOR TREATING AN EXHAUST GAS**
VERFAHREN ZUR BEHANDLUNG VON ABGAS
PROCEDE DE TRAITEMENT D'UN GAZ D'ECHAPPEMENT

(30) Priority: 01.04.2003 JP 2003098603
(43) Date of publication of application: 04.01.2006
(73) Proprietor: EBARA CORPORATION, Ohta-ku, Tokyo 144-8510 (JP)
(72) Inventor: MORI, Yoichi, Ohta-ku, Tokyo 1448510 (JP); SHINOHARA, Toyoji, Ohta-ku, Tokyo 1448510 (JP); SUZUKI, Yasuhiko, Ohta-ku, Tokyo 1448510 (JP)
(74) Representative: Geyer, Ulrich F.
(86) International application number: PCT/JP2004/004488
(87) International publication number: WO 2004/089515

(56) References cited:
- WO-A-03/047729
- WO-A1-01/76725
- WO-A1-01/78873

## Description

### Technical Field

The present invention relates to a method and apparatus for treating an exhaust gas, and more particularly to a method and apparatus for efficiently detoxifying an exhaust gas containing a fluorine compound which is discharged from a semiconductor fabrication process such as a dry-cleaning process of an inner surface of a semiconductor fabrication apparatus or an etching process of various types of films such as oxide films.

### Background Art

In a semiconductor fabrication process such as an etching process or a chemical vapor deposition (CVD) process, fluorine compounds such as hydrofluorocarbon (e.g., CHF₃) orperfluorocompound (e.g., CF₄, C₂F₆, C₃F₈, C₄F₈, C₅F₈, C₄F₆, SF₆, and NF₃) have been used in a system. In some cases, CO, NH₃ or O₂ may be used in a semiconductor fabrication apparatus. An exhaust gas discharged from a semiconductor fabrication apparatus which uses fluorine compounds, CO or NH₃ includes harmful components such as CO, NH₃, SiF₄, F₂, COF₂, C₅F₈, C₄F₆, or NF₃. The exhaust gas also includes fluorine compounds which are not harmful but affect the global warming. Therefore, when an exhaust gas is discharged from a semiconductor fabrication apparatus using fluorine compounds or the like an environmental atmosphere, it is necessary to detoxify a harmful gas included in the exhaust gas and also to decompose a gas which causes the global warming.

In a conventional method of treating a harmful gas (SiF₄, F₂, COF₂, C₅F₈, C₄F₆, or NH₃) included in an exhaust gas, harmful components are adsorbed by an adsorbent such as a synthetic zeolite. However, in this conventional method, perfluorocompound (PFC) cannot be removed from the exhaust gas. Further, the adsorbent needs to be replaced with a new one periodically, resulting in increased running cost.

A wet treatment apparatus (scrubbing process) has been used to scrub an exhaust gas for removing a water-soluble gas and a hydrolytic gas such as SiF₄, F₂ or NH₃ from the exhaust gas. However, such a scrubbing process cannot remove gases that are not water-soluble, such as PFC.

There has been proposed a method of removing PFC from an exhaust gas with various types of catalysts for decomposing PFC. However, if the catalyst is deteriorated, then harmful components such as CO, C₅F₈, and C₄F₆ may be discharged into the environmental atmosphere immediately after deterioration of the catalyst. There has also been proposed a method of treating PFC by combustion. However, NOx or CO may be produced as a by-product gas, depending on the combustion conditions. Since this method requires a fuel such as H₂, natural gas (city gas), or propane gas, it is necessary to provide equipment for supplying the fuel. Further, a complicated process is required to manage the operation. There has also been proposed a method of decomposing PFC by a heating oxidative decomposition. However, in order to decompose PFC (e.g., CF₄) that is unlikely to otherwise be decomposed, an exhaust gas should be heated to a high temperature of 1400°C or higher. In such a case, loads applied on materials and a heater in the system become considerably large.

There has been proposed a method in which NH₃, a lower saturated hydrocarbon gas, or a lower unsaturated hydrocarbon gas is added to an exhaust gas, and PFC is decomposed by a heating oxidative decomposition without free O₂ gas. Further, there has also been proposed a method of decomposing PFC with a plasma in the presence of water (H₂O). However, when PFC is decomposed, a harmful gas such as CO or HF is produced and thermal NOx is also produced. Therefore, it is necessary to provide a separate exhaust gas treatment apparatus for treating the harmful gas and the thermal NOx.

The Japanese patent No. 3217034 discloses a method in which water is added to an exhaust gas containing PFC and then the exhaust gas is heated in the presence of oxygen to react with catalyst so that PFC is decomposed or oxidized. However, there exist various types of fluorine compounds such as hydrofluorocarbon (e.g., CHF₃) and perfluorocompound (e.g., CF₄, C₂F₆, C₃F₈, C₄F₈, C₅F₈, C₄F₆, SF₆, and NF₃) . When such fluorine compounds are heated in the presence of water, most of these fluorine compounds are decomposed and hence an acid gas such as hydrofluoric acid is produced when being heated. Consequently, there arises a problem in that a heating section of a gas treatment tank is corroded by an acid gas such as hydrofluoric acid.

Attention is also drawn to WO 01 76 725 A which shows relates to method for treating an exhaust gas containing a fluorine-containing compound with a γ-alumina catalyst heated to a temperature of 500 to 1000°C after the removal of solids from the gas. H₂, O₂ and H₂O are added to the above exhaust gas for aiding the decomposition of the fluorine-containing compound and then the gas mixture is passed through the heated catalyst. The gas mixture is decomposed in to acidic gases and CO₂. Specifically for perfluorocarbons, H₂ and H₂O is added in molar amounts at least equal to the molar amount necessary for the F atoms in the PFC to be converted into HF, and O₂ is added in a molar amount at least equal to the amount necessary for the C atoms in the PFC to be converted into CO₂.

Furthermore, WO 01 78 873 A shows an apparatus and a process for the abatement of fluorine and fluorine-containing compounds from gases containing the same, such as effluent gas streams from semiconductor manufacturing operations. In accordance with the method of D2, a fluorocompound abatement medium is injected into the fluorocompound-containing gas. The fluorocompound abatement medium comprises at least one of steam, methane and hydrogen, with the proviso that when the fluorocompound abatement medium contains methane and/or hydrogen, the injection of the fluorocompound abatement medium is conducted under non-combustion conditions.

### Disclosure of Invention

The present invention has been made in view of the above drawbacks. It is therefore an object of the present invention to provide a method and apparatus for treating an exhaust gas which does not produce an acid gas such as hydrofluoric acid at a heating section of a gas treatment tank, and can thus prevent the heating section of the gas treatment tank from being corroded by the acid gas.

According to one aspect of the present invention, there is provided a method of treating an exhaust gas containing a fluorine compound, the method comprising: heating the exhaust gas in the presence of O₂; and then adding H₂O to the exhaust gas to decompose or oxidize the fluorine compound.

In a preferred aspect of the present invention, the fluorine compound is decomposed or oxidized in the presence of a catalyst after H₂O is added to the exhaust gas.

In a preferred aspect of the present invention, a method of treating an exhaust gas further comprises: before the heating, removing at least one of a powdery component, a water-soluble component, and a hydrolytic component from the exhaust gas.

In a preferred aspect of the present invention, a method of treating an exhaust gas further comprises: after the fluorine compound is decomposed or oxidized, removing an acid gas, which is produced when the fluorine compound is decomposed, from the exhaust gas.

According to the present invention described above, an exhaust gas containing a fluorine compound is heated to a required temperature ranging from 600 to 900°C, for example, by a heating section under O₂ atmosphere without adding water to the exhaust gas. Therefore, since water does not exist in the heating section, an acid gas such as hydrofluoric acid is not produced even when the fluorine compound is decomposed or oxidized. Accordingly, the heating section is prevented from being corroded by a hydrofluoric acid gas. O₂ is heated sufficiently by the heating section after being added to the exhaust gas, and then water is added to the exhaust gas in an H₂O adding section. Therefore, the fluorine compound is decomposed or oxidized efficiently at the downstream side of the heating section. An acid gas produced when the fluorine compound is decomposed is easily removed from the exhaust gas by an acid gas removal section disposed downwardly of the H₂O adding section where the fluorine compound is decomposed or oxidized. In this manner, the exhaust gas is treated to be harmless, and is then released to the atmosphere.

In the present invention, air or an O₂ gas is supplied to the exhaust gas containing the fluorine compounds so as to add O₂ to the exhaust gas, and the exhaust gas is then heated to a temperature ranging from 600 to 900 °C while adding water (H₂O) to the exhaust gas. Thus, most of the fluorine compounds except for PFC such as CF₄ or SF₆, which is unlikely to be decomposed, can be decomposed or oxidized to be harmless. Further, decomposition or oxidization is performed in the presence of a catalyst, so that PFC (e.g., CF₄, SF₆) that is unlikely to be decomposed can completely be decomposed at a relatively low temperature of 600 to 900°C by catalytic reaction. Therefore, when catalytic reaction is performed after the heating oxidative decomposition, for example, gas components such as CF₄ and SF₆ that are unlikely to be decomposed but need to be treated in view of the global warming can completely be decomposed and removed.

According to another aspect of the present invention, there is provided a method of treating an exhaust gas containing a fluorine compound, the method comprising: heating the exhaust gas in the presence of O₂; and then adding H₂ to the exhaust gas to decompose or oxidize the fluorine compound.

In a preferred aspect of the present invention, the fluorine compound is decomposed or oxidized in the presence of a catalyst after H₂ is added to the exhaust gas.

In a preferred aspect of the present invention, a method of treating an exhaust gas further comprises: before the heating, removing at least one of a powdery component, a water-soluble component, and a hydrolytic component from the exhaust gas.

In a preferred aspect of the present invention, a method of treating an exhaust gas further comprises: after the fluorine compound is decomposed or oxidized, removing an acid gas, which is produced when the fluorine compound is decomposed, from the exhaust gas.

According to the present invention, a H₂ gas and an O₂ gas (e.g., air) are added to the exhaust gas, instead of adding water (H₂O) . When H₂ and O₂ are added to the exhaust gas, water can be produced in the exhaust gas which is heated to a high temperature. Such water (H₂O) produced from H₂ and O₂ can decompose or oxidize the fluorine compound as with normal water. If the exhaust gas contains air (O₂) therein, water can be produced by supplying only a H₂ gas to the exhaust gas.

According to another aspect of the present invention, there is provided an apparatus for treating an exhaust gas containing a fluorine compound, the apparatus comprising: a heating section for heating the exhaust gas; an exhaust gas supply for supplying the exhaust gas to the heating section; an H₂O adding section located just downstream of the heating section for adding H₂O to the exhaust gas by supplying H₂O or H₂ to the exhaust gas; and an acid gas removal section for removing an acid gas produced by a reaction between the exhaust gas and H₂O.

In a preferred aspect of the present invention, the heating section comprises a heating wire, the heating wire is wound thickly at an inlet-side part of the heating section, and is wound thinly at an outlet-side part of the heating section.

In a preferred aspect of the present invention, an apparatus for treating an exhaust gas further comprises: a catalytic reactor disposed downstream of the H₂O adding section for decomposing the fluorine compound by catalytic reaction.

It is preferable that the heating wire is wound thickly at two-third of the heating section, and is wound thinly at remaining one-third of the heating section. With this structure, it is possible to widen the temperature range necessary for the heating oxidative decomposition within the range of 600 to 900 °C. Further, it is also possible to prevent a temperature of the exhaust gas flowing into the subsequent catalytic reactor from being increased to 900 °C or higher.

If the heating wire is wound thickly at the whole heating section, the temperature range necessary for the heating oxidative decomposition can be secured as with the case of the above structure. However, in this case, a temperature of the exhaust gas flowing into the catalytic reactor may excessively be increased to 900 °C or higher, thus causing the deterioration of the catalyst to be accelerated.

In a preferred aspect of the present invention, an apparatus for treating an exhaust gas further comprises: a water heating pipe disposed at the heating section; wherein H₂O to be added to the exhaust gas in the H₂O adding section is supplied through the water heating pipe and is heated by the water heating pipe.

In a preferred aspect of the present invention, an apparatus for treating an exhaust gas further comprises: a water heating pipe disposed outside of the heating section; and an external heater disposed on the water heating pipe; wherein H₂O to be added to the exhaust gas in the H₂O adding section is supplied through the water heating pipe and is heated by the external heater.

According to the present invention, water (H₂O) to be added to the exhaust gas in the H₂O adding section is heated sufficiently by the water heating pipe provided at the heating section, and is thus vaporized. Therefore, water to be added in the H₂O adding section is heated to a high temperature, and hence the fluorine compound contained in the exhaust gas can efficiently be decomposed or oxidized. The water heating pipe may be disposed inwardly of a circumferential wall of the heating section in such a state that the water heating pipe extends linearly or spirally. Alternatively, the heating section may have a double-wall structure comprising an inner wall and an outer wall, so that a heater is provided in the inner wall and the water heating pipe is provided in the outer wall. Water (H₂O) to be added in the H₂O adding section may be supplied from the water heating pipe extending from outside to inside of the heating section, and may be heated by the external heater. With this structure, a temperature of water can be controlled by the external heater as desired.

In a preferred aspect of the present invention, an apparatus for treating an exhaust gas further comprises: an air ejector for maintaining a pressure of the exhaust gas, which has been treated by the heating section, the H₂O adding section, and the acid gas removal section, at a predetermined value; and a bypass pipe for returning a part of the treated exhaust gas to an inlet side of the apparatus so as to mix the treated exhaust gas with the untreated exhaust gas.

### Brief Description of Drawings

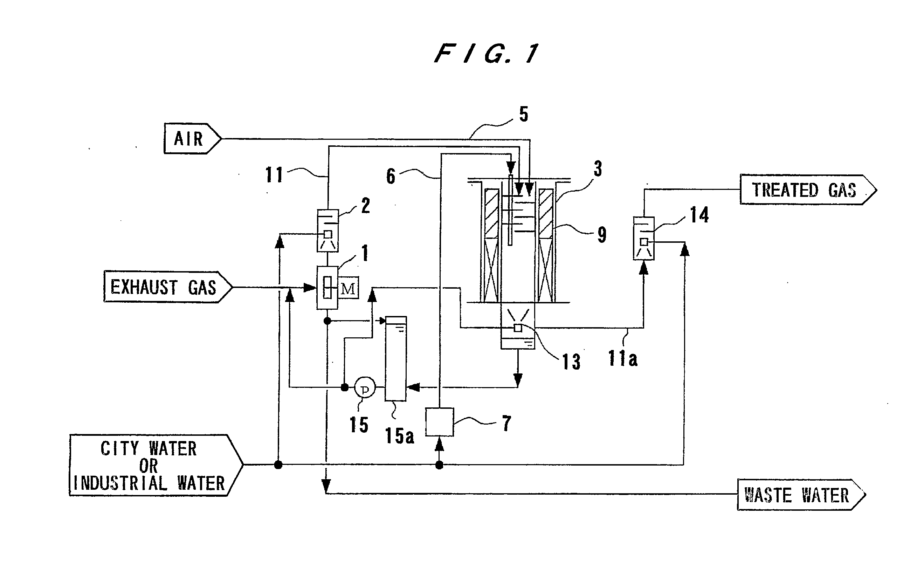

FIG. 1 is a block diagram showing an exhaust gas treatment apparatus for performing the method of the present invention;

### Best Mode for Carrying Out the Invention

An exhaust gas treatment apparatus for carrying out embodiments of the present invention will be described below with reference to the drawings. Like or corresponding parts are denoted by like or corresponding reference numerals throughout drawings and will not be described below repetitively.

FIG. 1 shows an exhaust gas treatment apparatus comprising a pre-treatment section for removing powdery components, water-soluble components, or hydrolytic components from an exhaust gas containing fluorine compounds, a heating oxidative decomposing section for performing heating oxidative decomposition of the pre-treated exhaust gas, and a post-treatment section for post-treating an acid gas such as HF which has been produced by the heating oxidative decomposition.

A fan scrubber 1 serves as the pre-treatment section. An exhaust gas to be treated passes through the fan scrubber 1 and then passes through a mist separator 2. The exhaust gas is introduced from the mist separator 2 into a gas treatment tank 3 through an exhaust gas introduction pipe 11. The fan scrubber 1 and the mist separator 2 are supplied with service water or industrial water, which is sprayed from a water spray provided in each of the fan scrubber 1 and the mist separator 2. The exhaust gas containing fluorine compounds flows from the fan scrubber 1 toward the mist separator 2 while being brought into contact with water sprayed from the water sprays, and hence powdery components, water-soluble components, or hydrolytic components are removed from the exhaust gas. Instead of the fan scrubber 1, the pre-treatment section may comprise a water spray tower, a gas passage stirring tank, or an adsorption tank filled with an adsorbent such as zeolite or activated carbon. The water spray tower, the gas passage stirring tank, and the adsorption tank can also achieve the aforementioned effects. Water is retained in a circulating tank 15a, and is supplied to the fan scrubber 1 by a circulating pump 15 which compresses the water.

Devices to be used as the pre-treatment section can properly be selected according to components in the exhaust gas to be treated, a degree to which powders are mixed, or states of the plant. Since an adsorption tank filled with an adsorbent uses no water, it is suitable for a case where no waste water treatment equipment is provided in the system. If the exhaust gas contains materials which should specially be maintained, such as arsenic (As) or lead (Pb), then waste water used in the wet scrubbing process is contaminated by such materials. For such cases, the wet scrubbing process is not suitable, but the adsorption process is suitable. The fan scrubber has a high rate of removal of the components with a small amount of water being supplied. Further, the fan scrubber has an excellent capability of capturing powders. Although the water spray tower requires an increased amount of water to be supplied in order to achieve a high rate of removal of the components, the water spray tower can reduce cost of the apparatus because of its simple structure. A liquid in the gas passage stirring tank can be adjusted in pH by a neutralizing liquid supplied thereto. Therefore, the gas passage stirring tank has a high rate of removal of components that would be difficult to be removed by another wet scrubbing process.

In the pre-treatment section, as described above, powdery components, water-soluble components, or hydrolytic components are removed from the exhaust gas with water or an adsorbent. For example, an acid gas such as SiF₄ or F₂ is removed from the exhaust gas in the pre-treatment section.

The exhaust gas which has passed through the pre-treatment section, i.e. the fan scrubber 1, is introduced into the gas treatment tank 3 through the exhaust gas introduction pipe 11, and is then heated to be oxidized or decomposed. The heating oxidative decomposition is performed in the gas treatment tank 3. An air pipe (i.e., an O₂ supply pipe) 5 is connected to the gas treatment tank 3 for supplying O₂ necessary for the reaction. A water pipe 6 is connected to the gas treatment tank 3 for supplying water (e.g., city water or industrial water) necessary for the reaction. The city water or the industrial water is purified up to a level of distilled water or pure water by a water purifier 7 connected to the water pipe 6, and is then supplied to the gas treatment tank 3. Thereafter, the purified water is vaporized by a water heating pipe and is supplied to an end portion of a heating section of the gas treatment tank 3. Alternatively, water required for the reaction may be sprayed with a spray provided in the heating oxidative decomposing tank (the gas treatment tank 3) without being vaporized by the water heating pipe. In this case, the sprayed water is heated and vaporized in the heating oxidative decomposing tank.

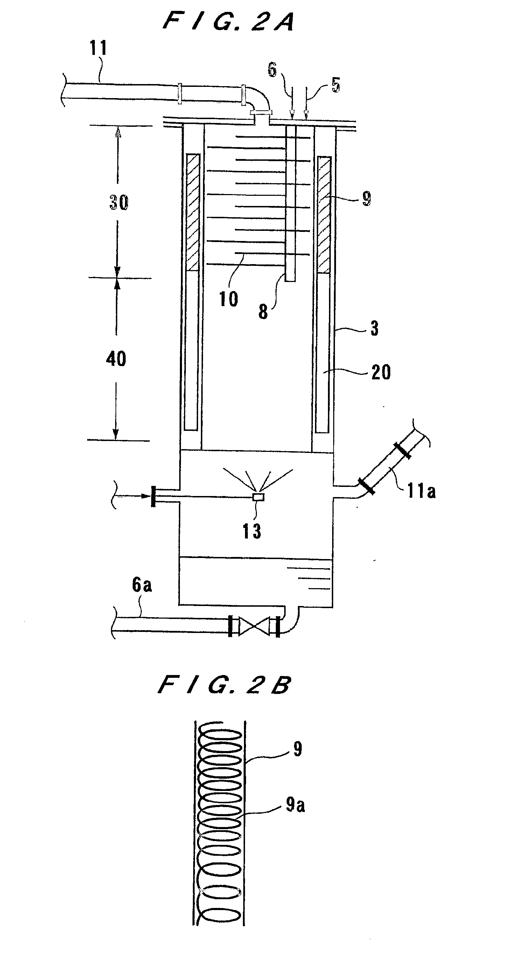

FIG. 2A shows an example of a structure of the gas treatment tank, and FIG. 2B is a schematic enlarged view showing a heating wire incorporated in the gas treatment tank shown in FIG. 2A. The gas treatment tank 3 has an electric tube furnace 9 made of ceramics and serving as a heater. A large number of plate members 10 having an excellent thermal conductivity are provided on an inner surface of the electric tube furnace 9 to form a detour path through which the exhaust gas passes. As shown in FIG. 2B, the electric tube furnace 9 has a heating wire 9a which is wound thickly at two-third of the heating section 30 and is wound thinly at remaining one-third of the heating section 30. With this structure, a mixture of the exhaust gas containing fluorine compounds and air (O₂) supplied from the air pipe 5 is heated to a temperature ranging from 700 to 900°C. The manner in which the heating wire 9a is arranged is not limited to the manner shown in FIG. 2B. For example, the heating wire 9a may be wound twice or more at the inlet-side part of the heating section 30 and is wound once at the outlet-side part of the heating section 30. A water heating pipe 8 is provided in the gas treatment tank 3, and is connected to the water pipe 6 which supplies water (H₂O). The water heating pipe 8 extends linearly from an inlet portion to an end portion of a heating section (a region 30 shown in FIG. 2A) comprising the electric tube furnace 9 and the plate members 10. Water (H₂O) supplied from the water pipe 6 is heated and vaporized by the water heating pipe 8 to be formed into a high-temperature vapor. The water as a high-temperature vapor is ejected from an open end of the water heating pipe 8 to the exhaust gas which has been heated to a high temperature, and is mixed with and added to the exhaust gas. If necessary, an oxygen supply communicating with the exhaust gas introduction pipe 11 (the exhaust gas supply) or the heating section 30 may be provided for supplying oxygen (e.g., air, oxygen-rich air, pure oxygen, or ozone).

Thus, in an H₂O adding section (i.e., a region 40 shown in FIG. 2A) located just downstream of the heating section 30 of the gas treatment tank 3, oxidation of CO and decomposition of PFC having four or more carbon atoms, hydrofluorocarbon, and NF₃ are performed according to the following reaction formulas. The H₂O. adding section 40 which is located downstream of the heating section 30 is surrounded by a heat insulator 20 provided in the gas treatment tank 3. In this H₂O adding section 40, the following reactions proceed due to addition of water (H₂O) and O₂ to the exhaust gas which has been heated to a high temperature. Therefore, all of the components in the exhaust gas that are considered to be harmful to human bodies can be oxidized or decomposed. Although oxidation and decomposition of fluorine compounds proceed even in the heating section 30, no hydrofluoric acid (HF) gas is produced in the heating section 30 because water (H₂O) is not added to the exhaust gas in the heating section 30. Therefore, in the gas treatment tank 3, the electric tube furnace 9 and the plate members 10 constituting the heating section 30 are not corroded and damaged by a hydrofluoric acid (HF) gas.

2CO + O₂ → 2CO₂

CO + H₂O → CO₂ +H₂

2H₂ + O₂ → 2H₂O

C₅F₈ + 4H₂O + 3O₂ → 5CO₂ + 8HF

C₄F₈ + 4H₂O + 2O₂ → 4CO₂ + 8HF

2C₄F₆ + 6H₂O + 5O₂ → 8CO₂ + 12HF

2CHF₃ + 2H₂O + O₂ → 3CO₂ + 8HF

2NF₃ + 3H₂O → NO + NO₂ + 6HF

In the oxidation, O₂ may be supplied from any O₂ sources such as atmospheric air, O₂-rich air, and pure O₂. Peroxide may be used as O₂. In this gas treatment tank 3, the air pipe 5 is connected to the exhaust gas introduction pipe 11, so that air and the exhaust gas to be treated are introduced into the gas treatment tank 3 from the top of the gas treatment tank 3. The aforementioned components in the exhaust gas can be oxidized and decomposed at a temperature ranging from 700 to 900°C. If the oxidation and decomposition are performed at a temperature of 1000°C or higher, then an amount of thermal NOx caused by N₂ in the air is increased. When the oxidation and decomposition are performed at a temperature of 900°C or lower, it is possible to economically select a fire-resistant element which is required to be used in the gas treatment tank 3, and hence a manufacturing cost can be lowered. Therefore, in the present embodiment, the oxidation and decomposition are performed at a temperature ranging from 700 to 900°C.

The post-treatment section post-treats an acid gas such as HF which is produced in the decomposing process of fluorine compounds. In the present embodiment, the post-treatment section comprises a spray nozzle 13 serving as an acid gas removal section. The decomposed exhaust gas passes through a water film formed by the spray nozzle 13 which is provided in the gas treatment tank 3, and the exhaust gas is then introduced to a mist separator 14 through an exhaust gas introduction pipe 11a. The exhaust gas passes through the mist separator 14, and is then released as a harmless gas to the atmosphere. The spray nozzle 13 and the mist separator 14 are supplied with city water or industrial water, which is sprayed in each of the spray nozzle 13 and the mist separator 14. The exhaust gas is brought into contact with the water sprayed from the spray nozzle 13. As a result, a hydrofluoric acid (HF) gas produced by the decomposition of PFC in the H₂O adding section (i.e., the decomposing treatment section) 40 of the gas treatment tank 3 is removed from the exhaust gas. Instead of the spray nozzle 13, the post-treatment section may comprise a fan scrubber, a water spray tower, a gas passage stirring tank, or an adsorption tank filled with an adsorbent such as zeolite or activated carbon. The fan scrubber, the water spray tower, the gas passage stirring tank, and the adsorption tank can also achieve the aforementioned effects.

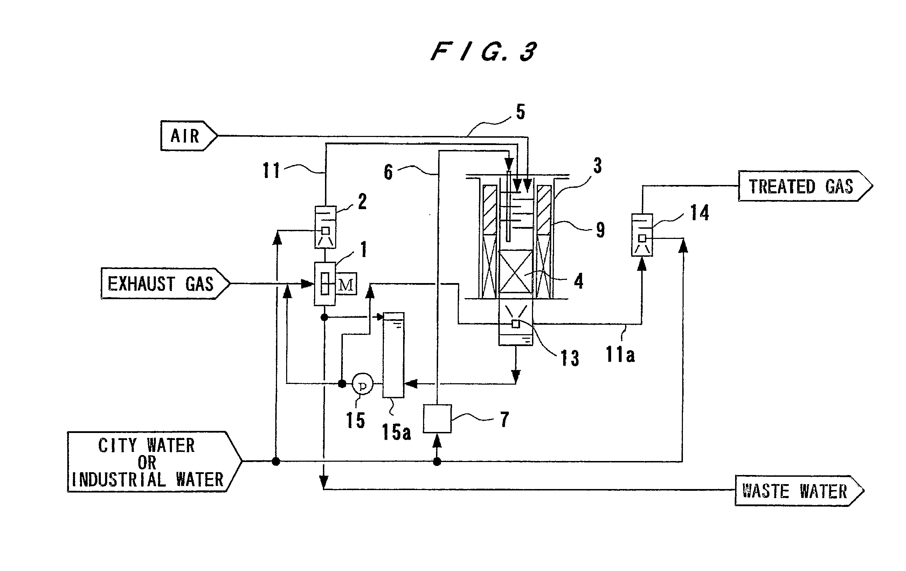

As shown in FIG. 3, the gas treatment tank 3 further comprises a catalytic reactor 4 disposed downstream of the heating section 30. In the gas treatment tank 3, the exhaust gas is heated to be oxidized or decomposed in the heating section 30, and is successively introduced into the catalytic reactor 4 where the exhaust gas is decomposed by catalytic reaction. The components of this embodiment other than the catalytic reactor 4 provided downstream of the H₂O adding section (i.e., the oxidative composition treatment section) 40 are the same as the components of the exhaust gas treatment apparatus shown in FIG. 1.

The catalytic reactor 4 has a catalyst filled therein for decomposing PFC. The exhaust gas is introduced into an upper portion of the catalytic reactor 4 and flows downward from an upper catalyst layer to a lower catalyst layer. The electric tube furnace (i.e., heater) 9 made of ceramics is disposed upstream of the catalytic reactor 4, and hence the catalytic reactor 4 is heated to a temperature ranging from 600 to 900°C. In the catalytic reactor 4, a temperature of the catalyst can be maintained at a suitable level for catalytic reaction by heat of the exhaust gas introduced into the catalytic reactor 4. Therefore, it is not necessary to provide a special device for heating the catalyst in the catalytic reactor 4. PFC having three or less carbon atoms and SF₆ are brought into contact with the catalyst, so that the decomposition of PFC and SF₆ is performed according to the following reaction formulas. In the following reaction formulas, O₂ which contributes to the decomposition has been added to the exhaust gas, to be treated, in the gas treatment tank 3, and water (H₂O) has been introduced into the exhaust gas at the end portion of the heating section 30 disposed upstream of the catalytic reactor 4. The catalyst comprises a catalyst for fluorine compounds, such as y alumina or alumina zirconium composite material carried with tungsten oxide. With this structure, it is possible to decompose PFC and SF₆ that are unlikely to be discomposed and have not been decomposed by the heat oxidative decomposition. Therefore, when the catalytic reactor 4 is incorporated into the exhaust gas treatment apparatus, components that do not directly affect human bodies but adversely affect the global warming can completely be removed from an exhaust gas.

CF₄ + 2H₂O → CO₂ + 4HF

2C₂F₆ + 6H₂O + O₂ → 4CO₂ + 12HF

C₃F₈ + 4H₂O + O₂ → 3CO₂ + 8HF

2SF₆ + 3H₂O + O₂ → SO₂ + SO₃ + 6HF

Next, test results of exhaust gas treatment with a testing apparatus equivalent to the exhaust gas treatment apparatus according to figure 3 will be described. An N₂ gas mixed with various types of gases to be treated was introduced into the testing apparatus, and the concentration (ppm) of components in the gas was measured at a plurality of locations.

The electric tube furnace (the heater) 9 was controlled so that a temperature of the catalytic reactor 4 was maintained at 750 °C. The gases to be treated comprised SiF₄, CHF₃, C₄F₈, C₄F₆, CO, C₅F₈, NF₃, SF₆ and CF₄. In this test, SiF₄ was supplied at a flow rate of 60 ml/min, CHF₃ 180 ml/min, C₄F₈ 60 ml/min, C₄F₆ 10 ml/min, CO 1200 ml/min, C₅F₈ 10 ml/min, NF₃ 120 ml/min, SF₆ 120 ml/min, and CF₄ 450 ml/min. These gases were mixed with the N₂ gas supplied at a flow rate of 120 l/min and introduced into the gas treatment tank 3. Air was introduced into the heating oxidative decomposing section of the gas treatment tank 3 at a flow rate of 30 l/min for supplying O₂ required for oxidation.

Similarly, pure water was introduced into the gas treatment tank 3 at a flow rate of 5 ml/min for oxidation and decomposition. Table 1 shows the test results of exhaust gas treatment. In table 1, example 1 shows the results of a case where pure water was introduced from the water heating pipe 8 whose open end is positioned at the end portion of the heating section 30, and comparative example 1 shows the results of a case where pure water was introduced from the top portion of the gas treatment tank 3 (i.e., the inlet of the heating section).

**Table 1**

| Component | Gas at the outlet of the post-treatment section | |
|---|---|---|
| | Example 1 | Comparative example 1 |
| CF₄ (ppm) | <0.2 | <0.2 |
| CHF₃ (ppm) | <0.2 | <0.2 |
| C₄F₈ (ppm) | <0.2 | <0.2 |
| C₅F₈ (ppm) | <0.2 | <0.2 |
| C₄F₆ (ppm) | <1 | <1 |
| CO (ppm) | <2 | <2 |
| NF₃ (ppm) | <1 | <1 |
| SF₆ (ppm) | <1 | <1 |
| HF (ppm) | <1 | <1 |
| SiF₄ (ppm) | <1 | <1 |

It can be seen from the above results that a small amount of the gas components had been detected at the outlet of the post-treatment section as shown in the example 1 and the comparative example 1. These results showed that these gas components were efficiently treated in the case of supplying the pure water from the water heating pipe (water vaporizing pipe) 8 which opens at the end portion of the heating section 30 and also in the case of supplying the pure water from the top portion of the gas treatment tank 3 (i.e., the inlet of the heating section).

Next, there will be described study results of a HF gas produced by supplying water (H₂O) from the top portion of the gas treatment tank 3 (i.e., the inlet of the heating section). In order to confirm that a corrosive HF gas is produced at the heating section with a high concentration when pure water is supplied from the top portion of the gas treatment tank 3, a gas-introduction test was carried out with a testing apparatus equivalent to the above exhaust gas treatment apparatus under the following conditions:

The electric tube furnace (the heater) 9 was controlled so that a temperature of the catalytic reactor 4 was maintained at 750°C. In this test, CF₄ was supplied at a flow rate of 450 ml/min, CHF₃ 180 ml/min, and C₄F₈ 60 ml/min. These PFC gases were mixed with a N₂ gas supplied at a flow rate of 120 l/min and air for oxidation supplied at a flow rate of 30 l/min, and then introduced into the gas treatment tank 3.

In order to measure an amount of HF produced by adding water (H₂O), a gas at the outlet of the heating section 30 was sampled through the water heating pipe 8. Table 2 shows the test results of the above gas sampling. In table 2, comparative example 2 shows a case where pure water was introduced from the top portion of the gas treatment tank 3 (i.e., the inlet of the heating section), and example 2 shows a case where pure water was not introduced.

**Table 2**

| Component | Gas at the outlet of the post-treatment section | |
|---|---|---|
| | Comparative example 2 | Example 2 |
| CF₄ (ppm) | 2700 | 3000 |
| CHF₃ (ppm) | <0.2 | 1200 |
| C₄F₈ (ppm) | <0.2 | 400 |
| HF (ppm) | 8000 | <1 |

From the above test results, it can be seen that HF, which is a corrosive gas, was produced in the heating section with a high concentration in the case where water (H₂O) was added from the top portion of the gas treatment tank 3 (i.e., the inlet of the heating section), as shown in comparative example 2. However, it is clear that HF was not produced in the heating section in the case where water (H₂O) was not added, as shown in example 2.

Next, there will be described test results of a case where a H₂ gas was introduced so as to produce water (H₂O), instead of adding water (H₂O). The testing apparatus and the testing conditions such as a treatment temperature of a gas were the same as those of the above tests.

In this test, CF₄ was supplied at a flow rate of 450 ml/min, CHF₃ 180 ml/min, C₄F₈ 60 ml/min, SiF₄ 60 ml/min, and CO 1200 ml/min. These gases to be treated were mixed with a N₂ gas supplied at a flow rate of 120 l/min and air for oxidation supplied at a flow rate of 30 l/min, and then introduced into the gas treatment tank 3.

In order to confirm a treatment effect of supplying a H₂ gas, H₂ was supplied from the water heating pipe 8 at a flow rate of 1.4 l/min, instead of supplying pure water. Table 3 shows the results of this test as example 3.

**Table 3**

| Component | Gas at the outlet of the post-treatment section |
|---|---|
| | Example 3 |
| CF₄ (ppm) | <0.2 |
| CHF₃ (ppm) | <0.2 |
| C₄F₈ (ppm) | <0.2 |
| CO (ppm) | <2 |
| SiF₄ (ppm) | <1 |
| H₂ (ppm) | <100 |

From the above test results, it can be seen that fluorine compounds were efficiently treated by introducing the H₂ gas and it is possible to obtain the same treatment effect as the case of adding water (H₂O).

The exhaust gas treatment method and apparatus according to the present invention are not limited to the illustrated examples. Although certain preferred embodiments of the present invention have been shown and described in detail, it should be understood that various changes and modifications may be made therein without departing from the scope of the present invention.

As described above, according to the present invention, it is possible to efficiently and economically detoxify an exhaust gas containing a fluorine compound which is discharged from a semiconductor fabrication apparatus or the like without causing any damage to the heating section.

### Industrial Applicability

The present invention is applicable to a method and apparatus for efficiently detoxifying an exhaust gas containing a fluorine compound which is discharged from a semiconductor fabrication process such as a dry-cleaning process of an inner surface of a semiconductor fabrication apparatus or an etching process of various types of films such as oxide films.

## Claims

1. A method of treating an exhaust gas containing a fluorine compound, said method comprising:
heating the exhaust gas in the presence of O₂ without adding H₂O to the exhaust gas; and
then adding H₂O to the exhaust gas to decompose or oxidize the fluorine compound.

2. A method of treating an exhaust gas according to claim 1, wherein the fluorine compound is decomposed or oxidized in the presence of a catalyst after H₂O is added to the exhaust gas.

3. A method of treating an exhaust gas according to claim 1 or 2, further comprising:
after the fluorine compound is decomposed or oxidized, removing an acid gas, which is produced when the fluorine compound is decomposed, from the exhaust gas.

4. A method of treating an exhaust gas containing a fluorine compound, said method comprising:
heating the exhaust gas in the presence of O₂ without adding H₂O to the exhaust gas; and
then adding H₂ to the exhaust gas to decompose or oxidize the fluorine compound.

5. A method of treating an exhaust gas according to claim 4, wherein the fluorine compound is decomposed or oxidized in the presence of a catalyst after H₂ is added to the exhaust gas.

6. A method of treating an exhaust gas according to any one of preceding claims, further comprising:
before said heating, removing at least one of a powdery component, a water-soluble component, and a hydrolytic component from the exhaust gas.

7. A method of treating an exhaust gas according to any one of claims 4 to 7, further comprising:
after the fluorine compound is decomposed or oxidized, removing an acid gas, which is produced when the fluorine compound is decomposed, from the exhaust gas.

8. A method of treating an exhaust gas according to any one of the preceding claims, wherein the exhaust gas is treated in the presence of O₂ to a temperature in the range of 700 to 900 °C prior to the addition of H₂O and/or H₂.

9. A method of treating an exhaust gas according to any one of the preceding claims, wherein prior to heating the exhaust gas one of the following is added thereto: air, oxygen-rich air, pure oxygen or ozone.

## Patentansprüche

1. Ein Verfahren zur Behandlung von Abgas, welches eine Fluorverbindung enthält, wobei das Verfahren folgendes vorsieht:
Erhitzen des Abgases in Anwesenheit von O₂ ohne Zugabe von H₂O zu dem Abgas; und
sodann Hinzugeben von H₂O zum Abgas zur Zerlegung oder Oxidierung der Fluorverbindung.

2. Ein Verfahren zur Behandlung von Abgas nach Anspruch 1, wobei die Fluorverbindung zerlegt oder oxidiert wird, und zwar in der Anwesenheit eines Katalysators nachdem H₂O dem Abgas hinzugefügt ist.

3. Ein Verfahren zur Behandlung von Abgas nach Anspruch 1 oder 2, wobei ferner folgendes vorgesehen ist:
Entfernen, nach dem die Fluorverbindung zerlegt oder oxidiert ist, ein Säuregas, welches beim Zerlegen der Fluorverbindung erzeugt wird aus dem Abgas.

4. Ein Verfahren zur Behandlung von Abgas, welches eine Fluorverbindung enthält, wobei das Verfahren folgendes vorsieht:
Erhitzen des Abgases in Anwesenheit von O₂ ohne Zugabe von H₂O zum Abgas; und
sodann Hinzufügen von H₂ zum Abgas zur Zerlegung oder Oxidierung der Fluorverbindung.

5. Ein Verfahren zur Behandlung von Abgas nach Anspruch 4, wobei die Fluorverbindung zerlegt oder oxidiert wird, und zwar in Anwesenheit eines Katalysators nach dem H₂ dem Abgas zugegeben wurde.

6. Ein Verfahren zur Behandlung von Abgas nach einem der vorhergehenden Ansprüche, wobei ferner folgendes vorgesehen ist:
vor dem Erhitzen Entfernen aus dem Abgas mindestens eine der folgenden Komponenten:
einer Pulverkomponente, einer wasserlöslichen Komponente, und einer hydrolytischen Komponente.

7. Ein Verfahren zur Behandlung von Abgas nach einem der Ansprüche 4 bis 7, wobei ferner folgendes vorgesehen ist:
Entfernen aus dem Abgas, nachdem die Fluorverbindung zerlegt oder oxidiert ist, ein Säuregas, welches erzeugt wird, wenn die Fluorverbindung zerlegt wird.

8. Ein Verfahren zur Behandlung von Abgas gemäß einem der vorhergehenden Ansprüche, wobei das Abgas in Anwesenheit von O₂ bis zu einem Temperaturbereich von 700 bis 900° C vor der Zugabe von H₂O und/oder H₂ behandelt wird.

9. Ein Verfahren zur Behandlung von Abgas nach einem der vorhergehenden Ansprüche, wobei vor dem Erhitzen des Abgases einer der folgenden Stoffe hinzugefügt wird: Luft, sauerstoffreiche Luft, reiner Sauerstoff oder Ozon.

## Revendications

1. Procédé de traitement d'un gaz d'échappement contenant un composé fluoré, ce procédé comprenant :
chauffer le gaz d'échappement en présence de O₂ sans ajouter d'H₂O au gaz d'échappement ; et
ajouter alors H₂O au gaz d'échappement pour décomposer ou oxyder le composer fluoré.

2. Procédé de traitement d'un gaz d'échappement selon la revendication 1, dans lequel le composé fluoré est décomposé ou oxydé en présence d'un catalyseur après addition de H₂O au gaz d'échappement.

3. Procédé de traitement d'un gaz d'échappement selon la revendication 1 ou 2 comprenant en outre :
après que le composé fluoré a été décomposé ou oxydé, enlever le gaz acide du gaz d'échappement qui se produit quand le composé fluoré se décompose.

4. Procédé de traitement d'un gaz d'échappement contenant un composé fluoré, ce procédé comprenant :
chauffer le gaz d'échappement en présence de O₂ sans ajouter d'H₂O au gaz d'échappement ; et
ajouter alors H₂ au gaz d'échappement pour décomposer ou oxyder le composé fluoré.

5. Procédé de traitement d'un gaz d'échappement selon la revendication 4, dans lequel le composé fluoré est décomposé ou oxydé en présence d'un catalyseur après addition de H₂ au gaz d'échappement.

6. Procédé de traitement d'un gaz d'échappement selon l'une quelconque des revendications précédentes, comprenant en outre :
avant le chauffage, enlever du gaz d'échappement au moins l'un d'un composant en poudre, d'un composant soluble dans l'eau et d'un composant hydrolytique.

7. Procédé de traitement d'un gaz d'échappement selon l'une quelconque des revendications 4 à 6 comprenant en outre :
après que le composé fluoré a été décomposé ou oxydé, enlever du gaz d'échappement le gaz acide qui se produit quand le composé fluoré se décompose.

8. Procédé de traitement d'un gaz d'échappement selon l'une quelconque des revendications précédentes, dans lequel le gaz d'échappement est traité en présence de O₂ à une température située dans une plage de 700 à 900°C avant l'addition de H₂O et/ou de H₂.

9. Procédé de traitement d'un gaz d'échappement selon l'une quelconque des revendications précédentes, dans lequel avant le chauffage du gaz d'échappement l'un des éléments suivants est ajouté : air, air riche en oxygène, oxygène pur ou ozone.
